Europäisches Patentamt

European Patent Office

Office européen des brevets

(11) Veröffentlichungsnummer: **0 088 894**
**B1**

(12) # EUROPÄISCHE PATENTSCHRIFT

(45) Veröffentlichungstag der Patentschrift:
20.12.89

(51) Int. Cl.⁴: **B 60 T 8/00**

(21) Anmeldenummer: **83101318.0**

(22) Anmeldetag: **11.02.83**

(54) **Antiblockierregelsystem.**

(30) Priorität: **15.03.82 DE 3209369**

(43) Veröffentlichungstag der Anmeldung:
**21.09.83 Patentblatt 83/38**

(45) Bekanntmachung des Hinweises auf die Patenterteilung:
**20.12.89 Patentblatt 89/51**

(84) Benannte Vertragsstaaten:
**DE FR GB NL SE**

(56) Entgegenhaltungen:
**DE-A- 2 830 809**
**US-A- 3 637 264**
**US-A- 3 790 227**

(73) Patentinhaber: **ROBERT BOSCH GMBH, Postfach 50,
D-7000 Stuttgart 1 (DE)**

(72) Erfinder: **Jonner, Wolf-Dieter, Ing. grad.,
Burgunderstrasse 24, D-7141 Beilstein (DE)**
Erfinder: **Korasiak, Wolfgang, Ing. grad., Bromberger
Strasse 20, D-7120 Bietigheim (DE)**
Erfinder: **Leiber, Heinz, Ing. grad.,
Theodor-Heuss-Strasse 34, D-7141 Oberriexingen (DE)**

## Beschreibung

### Stand der Technik

Die Erfindung geht aus von einem Antiblockierregelsystem nach der Gattung des Hauptanspruches.

Es ist bekannt, in Fahrzeugen Antiblockierregelsysteme zu verwenden, bei denen aus den Signalen von Raddrehzahlgebern Steuersignale erzeugt werden, die der Fahrzeugverzögerung, der Fahrzeugbeschleunigung und dem Schlupf zwischen den Rädern und der Fahrbahn entsprechen. In Abhängigkeit von Grenzwerten dieser Steuersignale werden bei Blockierneigung der Räder die einzelnen Radbremsen derart angesteuert, daß die Räder des Fahrzeuges jeweils kurz unterhalb der Blockiergrenze betrieben werden.

Bei Fahrbahnen mit stark asymmetrischem Reibbeiwert kann es dann, wenn die Räder der einen Fahrzeugseite sich auf trockenem Untergrund befinden und die Räder der anderen Fahrzeugseite beispielsweise auf einer Eisplatte, zu erheblichen Giermomenten, d.h. Momenten um die Hochachse des Fahrzeuges kommen, da die Räder auf der trockenen Fahrbahn greifen und das Fahrzeug verzögert, die Räder auf der schlüpfrigen Fahrbahnseite jedoch nicht. Dies gilt insbesondere für Schwerlastfahrzeuge.

Um das Auftreten von zu hohen Giermomenten zu vermeiden, ist es aus der DE-A-2 830 809 bekannt, die Bremsen auf der Fahrzeugseite mit dem höheren Reibbeiwert in Abhängigkeit von den Bremsen auf der Seite mit dem niedrigen Reibbeiwert zu steuern. Hierbei wird der Bremsdruck auf der Fahrzeugseite mit dem hohen Reibbeiwert ab Beginn der Regelung auf der anderen Seite zunächst für eine Zeit konstantgehalten, dann um eine Druckstufe erhöht und dann weiter konstantgehalten, bis ein gepulster Druckanstieg auf der Seite mit dem niedrigen Reibbeiwert auftritt. Der Druck auf der Seite mit dem hohen Reibbeiwert wird dann synchron mit hochgepulst.

Unter extremen Fahrbedingungen, insbesondere bei besonders hohen Reibbeiwertunterschieden zwischen beiden Fahrzeugseiten und remanenten Bremsmomenten auf der Fahrzeugseite mit dem niedrigen Reibbeiwert, die durch erhöhte Lagerreibung oder schlecht lösende Bremsen hervorgerufen werden, können sich auch bei der oben erläuterten Ausbildung noch unbefriedigende Resultate, insbesondere im Hinblick auf einen zu langen Bremsweg einstellen, weil bei einer Wechselwirkung der oben beschriebenen Art der Druckaufbau auf der Fahrzeugseite mit hohem Reibbeiwert zu lange verzögert wird.

### Vorteile der Erfindung

Das erfindungsgemäße Antiblockierregelsystem mit den kennzeichnenden Merkmalen des Hauptanspruches hat demgegenüber den Vorteil, daß ein optimaler Kompromiß zwischen verringertem Giermoment und kurzem Bremsweg erzielt wird. Vorteilhaft ist auch, daß das Giermoment zuerst klein gehalten wird und sich danach langsam aufbaut, so daß der Fahrer sich darauf einstellen kann.

Durch die in dem Unteranspruch aufgeführte Maßnahme ist eine vorteilhafte Weiterbildung des im Hauptanspruch angegebenen Antiblockierregelsystems möglich.

Weitere Vorteile ergeben sich aus der Beschreibung und der beigefügten Zeichnung.

### Zeichnung

Ein Ausführungsbeispiel der Erfindung ist in der Zeichnung dargestellt und wird in der nachfolgenden Beschreibung näher erläutert. Es zeigen

Figur 1 den Verlauf des Bremsdruckes der linken und rechten Fahrzeugseite bei einem Antiblockierregelsystem mit Giermomentausgleich nach dem Stand der Technik

Figur 2 den Bremsdruckverlauf nach dem Stand der Technik in einer extremen Fahrsituation

Figur 3 den Bremsdruckverlauf in der extremen Fahrsituation nach der vorliegenden Erfindung

Figur 4 Steuersignale, wie sie bei der vorliegenden Erfindung verwendet werden

Figur 5 ein Blockschaltbild einer Ausführungsform eines erfindungsgemäßen Antiblockierregelsystems Figur 6 ein Blockschaltbild eines Taktgenerators, wie er beim Ausführungsbeispiel gemäß Figur 5 verwendet wird.

### Beschreibung der Ausführungsbeispiele

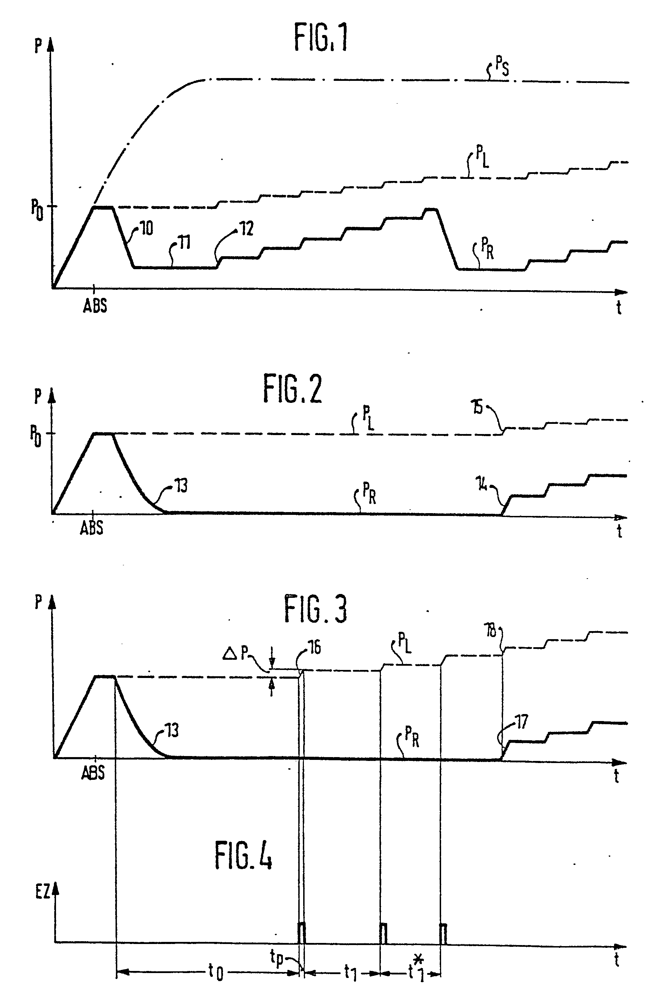

In Figur 1 ist der Bremsdruck P über der Zeit t aufgetragen. Zu einem Zeitpunkt, in dem das Antiblockierregelsystem ABS wirksam wird, wird nicht mehr der Steuerdruck $P_S$ vorgegeben, sondern der Bremsdruck wird zunächst auf einem Wert $P_0$ konstant gehalten. In der nachfolgenden Beschreibung wird auf den Fall abgestellt, daß die rechte Fahrzeugseite sich auf einem Untergrund mit niedrigem Reibbeiwert (Schnee, Eis oder dgl.) befindet, während die linke Fahrzeugseite sich auf einer griffigen Fahrbahn befindet. Demzufolge fällt auf der rechten Fahrzeugseite der Druck $P_R$ bei 10 ab, geht bei 11 in eine Konstantphase über und wird bei 12 getaktet wieder erhöht. Um zu hohe Giermomente des Fahrzeuges, d.h. Momente um die Hochachse, zu vermeiden, sind im Stand der Technik Systeme bekannt, die den Druck der linken Fahrzeugseite zunächst konstant halten und dann bei 12 entsprechend dem getakteten Aufbau des Druckes $P_R$ der rechten Fahrzeugseite erhöhen, vorzugsweise jedoch in geringeren Stufen.

In Figur 2 ist der Druckverlauf für eine extreme Fahrsituation dargestellt, in der der Unterschied des Reibbeiwertes auf beiden Fahrzeugseiten besonders hoch ist. An der mit 13 bezeichneten Stelle des Druckes $P_R$ der rechten Fahrzeugseite sinkt dieser praktisch auf den Wert Null ab, da die Fahrbahn auf der rechten Seite besonders schlüpfrig ist. Da auch nachfolgend keine Druckerhöhung auf der rechten Fahrzeugseite stattfinden, bleibt der Druck $P_L$ der linken Fahrzeugseite solange konstant, bis bei 14 bzw. 15 wieder eine getaktete Erhöhung eintritt. Diese lange Zeitdauer vom Wirksamwerden des Regelsystems ABS an bis zum Zeitpunkt 14 bzw. 15 führt jedoch zu einer Bremswegverlängerung, da die linke Fahrzeugseite mit einem zu geringen Bremsdruck betrieben wird.

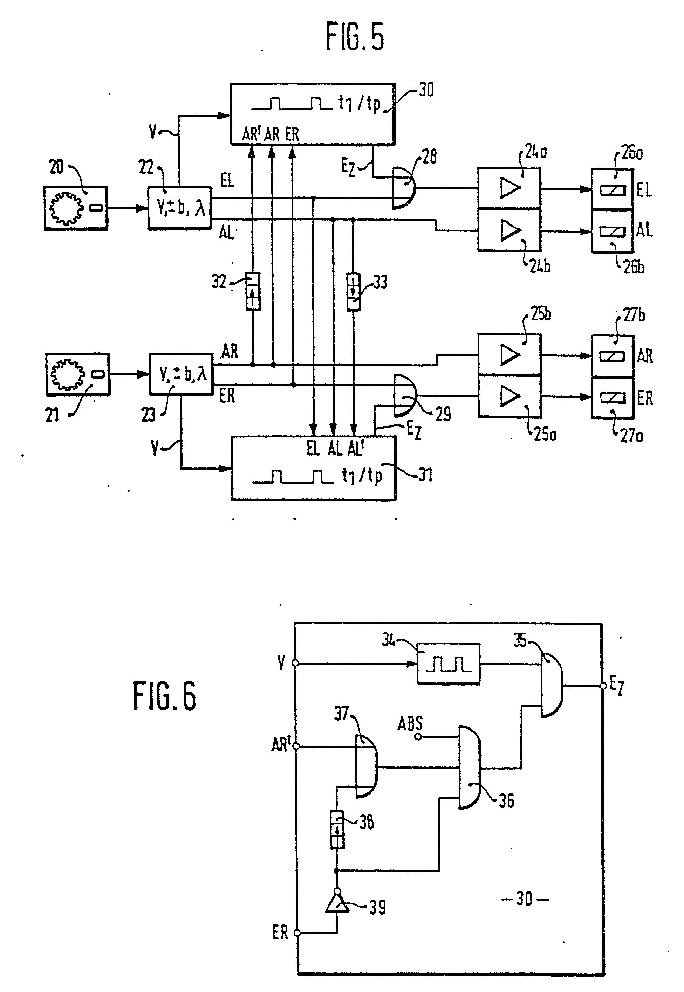

Erfindungsgemäß ist daher eine Zwangssteuerung vorgesehen, wie sie in Figur 3 und 4 veranschaulicht ist. Dabei wird nach Wirksamwerden des Regelsystems ABS die Zeit überwacht, in der der Bremsdruck $P_R$ der rechten Seite abgesenkt bleibt bzw. keine erneute Bremsdruckerhöhung eintritt. Hierzu ist eine Maximaldauer $t_0$ vorgegeben, nach der eine zwangsweise Erhöhung des Bremsdruckes $P_L$ der linken Fahrzeugseite vorgenommen wird. Hierzu wird ein Zwangssteuersignal $E_z$ mit einem Takt $t_p/t_1$ vorgegeben, wobei $t_p$ die Impulslänge und $t_1$ die Impulspause für eine Bremsdruckerhöhung in Stufen $\Delta P$ auf der linken Fahrzeugseite darstellt. Da bei den üblichen Antiblockierregelsystemen die Bremsdruckerhöhung dadurch erzeugt wird, daß ein Einlaßventil bei geschlossenem Auslaßventil öffnet, ist die Druckstufe $\Delta P$ der Zeitdauer $t_p$ unmittelbar proportional. Es versteht sich jedoch, daß statt der nachstehend beschriebenen Zeitsteuerung $t_p/t_1$ auch eine Druckstufensteuerung $\Delta P$ vorgenommen werden kann.

Die getaktete Zwangserhöhung des Druckes $P_L$ auf der linken Fahrzeugseite wird nun solange fortgesetzt, bis auf der rechten Fahrzeugseite bei 17 wieder eine reguläre Druckerhöhung eintritt. Von diesem Zeitpunkt an wird dann der Druck $P_L$ der linken Fahrzeugseite, wie bie 18 dargestellt, vom Druck $P_R$ der rechten Fahrzeugseite geführt, wie dies im Stand der Technik bekannt ist.

Insgesamt ergibt sich damit eine erhebliche Verkürzung des Bremsweges, ohne daß dadurch das Giermoment merklich zunimmt.

In bevorzugter Ausgestaltung der Erfindung ist dabei vorgesehen, die Zeit $t_1$ oder $t_p$ zur Anpassung an verschiedene Fahrsituationen fahrgeschwindigkeitsabhängig einzustellen, wie dies in Figur 4 durch unterschiedliche Zeiten $t_1$, $t^*_1$ angedeutet ist. Dabei kann bevorzugt $t_p$ umgekehrt proportional zur Fahrgeschwindigkeit und $t_1$ proportional zur Fahrgeschwindigkeit eingestellt werden.

Figur 5 zeigt ein Blockschaltbild einer Ausführungsform eines erfindungsgemäßen Antiblockierregelsystems. Dabei sind zwei identische Kanäle für die linke und die rechte Fahrzeugseite vorgesehen. Der Kanal der linken Fahrzeugseite besteht aus einem Drehzahlgeber 20, der auf eine Signalaufbereitungsschaltung 22 arbeitet. Diese wiederum ist an Ansteuerschaltungen 24a, 24b für das linke Einlaßventil 26a bzw. das linke Auslaßventil 26b angeschlossen. Der Kanal der rechten Fahrzeugseite besteht aus entsprechenden Elementen 21, 23, 25a, 25b, 27a, 27b.

In den Signalaufbereitungsschaltungen 22, 23 werden der Fahrgeschwindigkeit v, der Fahrzeugbeschleunigung $+b$, der Fahrzeugverzögerung $-b$ und dem Schlupf $\lambda$ zwischen Rad und Fahrbahn entsprechende Signale gebildet und es werden Ansteuersignale EL, AL, ER, AR für die Ein- bzw. Auslaßventile der linken bzw. rechten Fahrzeugseite gebildet, die den Ventilen 26, 27 über die Ansteuerschaltungen 24, 25 zugeführt werden.

Um die zwangsweise Erhöhung des Bremsdruckes an dem Rad mit höherem Reibbeiwert zu ermöglichen, ist in die Leitungen für die Einlaßventile jeweils ein ODER-Gatter 28 bzw. 29 vor die entsprechende Ansteuerschaltung 24a bzw. 25a geschaltet. Der weitere Eingang der ODER-Gattung 28 bzw. 29 ist mit dem Zwangssteuersignal $E_z$ beaufschlagt, das von einem Taktgenerator 30 bzw. 31 erzeugt wird. Dabei ist der Taktgenerator 30 der linken Fahrzeugseite mit den Einlaß- und Auslaßsignalen ER, AR der rechten Fahrzeugseite beschaltet und zusätzlich mit einem über ein Verzögerungsglied 32 erzeugten Signal AR', das dann auftritt, wenn das Signal AR länger als die Zeitdauer $t_0$ ansteht, die im Verzögerungsglied 32 vorgegeben ist. Entsprechende symmetrische Verbindungen bestehen von der linken Fahrzeugseite zum Taktgenerator 31 der rechten Fahrzeugseite, wobei wiederum ein Zeitglied 33 die Zeit $t_0$ darstellt. Schließlich sind beide Taktgeneratoren 30, 31 noch mit einem fahrgeschwindigkeitsabhängigen Signal v beaufschlagt, das von den Signalaufbereitungsschaltungen 22, 23 zugeführt wird.

Die Taktgeneratoren 30, 31 erzeugen eine Impulsfolge mit einem Tastverhältnis $t_p/t_1$. Hierzu können die Taktgeneratoren 30, 31 eine Schaltung aufweisen, wie sie beispielhaft in Figur 6 dargestellt ist. Die Impulsfolge mit dem Taktverhältnis $t_p/t_1$ wird von einem Taktgeber 34 erzeugt, wobei das Tastverhältnis $t_p/t_1$ vom Signal v einstellbar ist. Die Impulse des Taktgebers 34 werden dem Ausgang über ein UND-Gatter 35 zugeführt, dessen weiterer Eingang von einem UND-Gatter 36 gesteuert wird. Die drei Eingänge des UND-Gatters 36 sind einmal mit einem Signal ABS, das das Wirksamwerden des Antiblockierregelsystems anzeigt, zum anderen mit dem Ausgangssignal eines ODER-Gatters 37 und schließlich mit dem Ausgangssignal eines Inverters 39 beschaltet. Am Eingang des Inverters 39 liegt das Signal ER für das Einlaßventil; der Inverter 39 ist weiterhin über ein Zeitglied 38, das gleichfalls die Zeit $t_0$ darstellt mit einem Eingang des ODER-Gatters 37 verbunden, dessen weiterer Eingang mit dem Signal AR' beaufschlagt ist.

Wie man leicht sieht, werden die Impulse des Taktgenerators 34 nur dann auf den Ausgang $E_z$ durchgeschaltet, wenn das UND-Gatter 36 ebenfalls durchgeschaltet ist. Dies ist dann der Fall, wenn die Regelung arbeitet (Signal ABS), wenn weiterhin ein Signal AR' oder kein Signal ER länger als $t_0$ anliegt und wenn schließlich keine Bremsdruckerhöhung auf der Fahrzeugseite mit niedrigem Reibbeiwert (17 in Figur 3) stattfindet. Das ODER-Gatter 37 erkennt damit ein zu langes Absenken des Bremsdruckes auf der Fahrzeugseite mit niedrigem Reibwert dadurch, daß entweder das Auslaßventil zu lange geöffnet wird (Signal AR') oder daß eine Erhöhung des Bremsdruckes zu lange auf sich warten läßt (invertiertes Signal ER mit Verzögerungsglied 38). Es versteht sich, daß die in Figur 6 dargestellte Schaltung nur als Beispiel angeführt ist und selbstverständlich auch andere logische Verknüpfungen verwendet werden können.

Gelangt demnach die Schaltung gemäß Figur 5 in eine Situation, wie sie oben zu Figur 3 erläutert wurde, wird über das Verzögerungsglied 32 erkannt, daß das Auslaßventil der rechten Fahrzeugseite zu lange öffnet, so daß der Bremsdruck der rechten Fahrzeugseite zu weit abfällt. Dieses Kriterium oder das zu lange Ausbleiben des Signales ER führt zu einem Durchsteuern des Taktsignales des Taktgenerators 30, so daß das Signal $E_z$ über das ODER-Gatter 28 in den Einlaßkanal der linken Fahrzeugseite gelangt und damit im eingestellten Tastverhältnis $t_p/t_1$ eine sukzessive Bremsdruckerhöhung der linken Fahrzeugseite bewirkt.

## Patentansprüche

1. Antiblockierregelsystem für Fahrzeuge mit Raddrehzahlgebern (20, 21), Signalaufbereitungsschaltungen (22, 23) zur Erzeugung von Beschleunigungs- (+b), Verzögerungs- (−b) und Schlupfwerten (λ) und mit Ansteuerschaltungen (24a, 24b; 25a, 25b) zum Betätigen von Ein- und Auslaßventilen (26a, 26b; 27a, 27b) zur Bremsdruckvariation an den Radbremsen der Räder einer Achse, wobei zur Vermeidung hoher Giermomente bei asymmetrischem Reibbeiwert der Fahrbahn normalerweise der Bremsdruck ($P_L$) am Rad mit dem höheren Reibbeiwert während der Druckabsenkung und einer anschließenden Druckkonstanthaltung am Rad mit dem niedrigeren Reibbeiwert für eine vorgegebene Zeit konstantgehalten und nach Ablauf dieser Zeit impulsförmig erhöht wird und wobei der Druck ($P_L$) am Rad mit dem höheren Reibbeiwert bei impulsförmigem Druckaufbau am Rad mit dem geringen Reibbeiwert synchron mit diesem hochgepulst wird, dadurch gekennzeichnet, daß erste Zeitglieder (32, 33) vorgesehen sind, von denen jedem die Ansteuersignale eines Auslaßventils (26b, 27b) zugeführt werden und die die Zeit der Druckabsenkung am Rad mit dem niedrigen Reibbeiwert überwachen und/oder daß zweite Zeitglieder (38) vorgesehen sind, von denen jedem die Ansteuersignale eines Einlaßventils (26a, 26b) zugeführt werden und die die Zeit bis zum Einsetzen der erneuten Druckerhöhung am Rad mit dem niedrigen Reibbeiwert überwachen, daß die Zeitglieder (32, 33, 38) bei Überschreiten vorgegebener Zeitdauer ($t_0$) einen eine Impulsfolge ($E_z$) abgebenden Taktgenerator (34) am Einlaßventil (26a) des auf dem höheren Reibbeiwert laufenden Rads wirksam machen derart, daß der Druck in Stufen (ΔP) mit einem Tastverhältnis $t_p/t_1$ erhöht wird und daß diese Impulsfolge ($E_z$) am Einlaßventil (26a) unterdrückt wird, wenn die synchrone, gepulste Druckerhöhung an beiden Rädern einsetzt.

2. Antiblockierregelsystem nach Anspruch 1, dadurch gekennzeichnet, daß das Tastverhältnis $t_p/t_1$ änderbar ist und mit der Fahrzeuggeschwindigkeit anwächst.

## Claims

1. Anti-skid regulation system for vehicles having wheel speed transducers (20, 21), signal processing circuits (22, 23) to generate acceleration (+b), deceleration (−b) and slip (λ) values and having control circuits (24a, 25b; 25a, 25b) to activate inlet and outlet valves (26a, 26b; 27a, 27b), to vary the braking pressure at the wheel brakes of the wheels of an axle, in which in order to prevent high yawing moments in the case of an asymmetrical coefficient of friction of the road, the braking pressure ($P_L$) on the wheel with the higher coefficient of friction is normally maintained constant for a predetermined time during the pressure reduction and a subsequent maintenance of constant pressure at the wheel with the lower coefficient of friction and is increased pulsatorily after the expiry of this time, and in which in the case of a pulsatory build-up of pressure at the wheel with the low coefficient of friction, the pressure ($P_L$) at the wheel with the higher co-efficient of friction is pulsed up synchronously with the latter, characterized in that first timing elements (32, 33) are provided, to each of which the control signals of an outlet valve (26b, 27b) are fed and which monitor the time of the pressure reduction at the wheel with the low coefficient of friction and/or in that second timing elements (38) are provided, to each of which the control signals of an inlet valve (26a, 26b) are fed and which monitor the time until the commencement of the fresh pressure increase at the wheel with the low coefficient of friction, in that when predetermined duration ($t_0$) are exceeded the timing elements (32, 33, 38) activate a clock generator (34) which delivers a pulse train ($E_Z$) at the inlet valve (26a) of the wheel running on the higher coefficient of friction in such a manner that the pressure is increased in stages (ΔP) with a pulse duty factor $t_p/t_1$, and in that said pulse train ($E_Z$) is suppressed at the inlet valve (26a) when the synchronous pulsatory pressure increase commences at both wheels.

2. Anti-skid regulation system according to Claim 1, characterized in that the pulse duty factor $t_p/t_1$ is variable and increases with the speed of the vehicle.

## Revendications

1. Système de régulation antiblocage pour véhicules comprenant des transmetteurs de la vitesse de rotation des roues (20, 21), des circuits de traitement de signal (22, 23) pour produire des valeurs d'accélération (+b), de ralentissement (−b) et de dérapage (λ), et des circuits de commande (24a, 24; 25a, 25b) pour actionner des soupapes d'admission et d'échappement (26a, 26b; 27a, 27b) destinées à la variation de la pression de freinage sur les freins des roues d'un essieu. Pour éviter des couples de lacet élevés en cas de coefficients de frottement asymétriques de la piste de roulement, pendant la chute de pression et un maintien consécutif à un niveau constant de la pression concernant la roue présentant le coefficient de frottement le plus faible, la pression de freinage ($P_L$) exercée sur la roue présentant le coefficient de frottement le plus élevé est normalement maintenue constante pour un temps déterminé et accrue en forme d'impulsions après expiration de ce temps, la pression ($P_L$) sur la roue de coefficient de frottement le plus élevé étant accrue de manière synchrone, par impulsions avec la pression sur la roue à faible coefficient de frottement, lors de l'établissement par impulsion de cette pression, caractérisé en ce qu'il est prévu des premiers organes de temporisation (32, 33) à chacun desquels sont amenés les signaux de commande d'une soupape d'échappement (26b, 27b) et contrôlant la durée de la chute de pression sur la roue à bas coefficient de frottement et/ou en ce qu'il est prévu des deuxièmes organes de temporisation (38) à chacun desquels sont amenés les signaux de commande d'une soupape d'admission (26a, 27a) et surveillant la durée jusqu'à l'introduction du nouvel accroissement de pression sur la roue à bas coefficient de frottement, en ce que, lors du dépassement d'une durée prédéterminée ($t_0$), les organes de temporisation (32, 33, 38) mettent en action sur la soupape d'admission (26a) de la roue tournant avec le coefficient de frottement le plus élevé, un générateur de synchronisation (34) délivrant une succession d'impulsions ($E_Z$), de façon que la pression soit accrue par étapes ($\Delta$), avec un facteur d'impulsion $t_p/t_1$ et en ce que cette succession d'impulsions ($E_Z$) est stoppée sur la soupape d'admission (26a) s'il y a accroissement de pression cadencé synchrone sur les deux roues.

2. Système de régulation antiblocage selon la revendication 1, caractérisé en ce que le facteur d'impulsion $t_p/t_1$ est modifiable et augmente avec la vitesse du véhicule.

FIG.1

FIG.2

FIG.3

FIG.4

# FIG.5

# FIG.6